# EUROPÄISCHE PATENTSCHRIFT

(11) **EP 3 362 335 B1**
(45) Veröffentlichungstag und Bekanntmachung des Hinweises auf die Patenterteilung: **26.06.2019**
(21) Anmeldenummer: 16781416.9
(22) Anmeldetag: 12.10.2016
(51) Int. Cl.: B62D 25/02, B60K 1/04, B60R 13/04, B60K 6/28, H01M 2/10, H01M 10/0525

(54) **VERKLEIDUNG EINES AUSSENSCHWELLERS, ENERGIESPEICHERELEMENT UND FAHRZEUG**
COVERING OF AN OUTER SILL, ENERGY STORAGE ELEMENT AND VEHICLE
HABILLAGE D'UN SEUIL EXTÉRIEUR, ÉLÉMENT ACCUMULATEUR D'ÉNERGIE ET VÉHICULE

(30) Priorität: 16.10.2015 DE 102015220214
(43) Veröffentlichungstag der Anmeldung: 22.08.2018
(73) Patentinhaber: Bayerische Motoren Werke Aktiengesellschaft, 80809 München (DE)
(72) Erfinder: LATHWESEN, Harald, 85419 Mauern (DE); ROTTELBERGER, Markus, 84032 Altdorf (DE); RIEDL, Wilhelm, 85276 Pfaffenhofen (DE)
(86) Internationale Anmeldenummer: PCT/EP2016/074484
(87) Internationale Veröffentlichungsnummer: WO 2017/064126

(56) Entgegenhaltungen:
- DE-A1- 10 224 884
- DE-A1-102012 215 848
- US-B1- 6 276 109

## Beschreibung

Die vorliegende Erfindung betrifft eine Verkleidung eines Außenschwellers, ein Energiespeicherelement eines Fahrzeuges sowie ein Fahrzeug. Die vorliegende Erfindung betrifft insbesondere eine Verkleidung eines Außenschwellers eines Fahrzeuges, vorzugsweise eines Kraftfahrzeuges, ein Energiespeicherelement eines Fahrzeuges, insbesondere eines Elektro- oder Hybridkraftfahrzeuges, sowie ein Fahrzeug, insbesondere ein Kraftfahrzeug.

Es sind Schwellersysteme bekannt, bei welchen der Schweller als Ganzes im Karosseriebau z.B. durch Schweißen aus Einzelteilen miteinander verbunden wird. Des Weiteren existieren Schwellerverkleidungen, welche in der Montage in unterschiedlichen Formen und Ausführungen anmontiert werden, insbesondere an der Seite und Unterseite des jeweiligen Schwellers.

Dabei ist insbesondere problematisch, dass bisherige Schwellerverkleidungen keine Aggregate berücksichtigen, die ebenfalls an der Fahrzeugunterseite montiert werden, zum Beispiel im Rahmen der so genannten Hochvoltspeicherintegration bei Elektro- oder Hybridfahrzeugen. Demzufolge werden bisher Aggregate und insbesondere Hochvoltspeicherelemente auf der Fahrzeugunterseite neben einer jeweiligen Schwellerverkleidung benachbart angeordnet und montiert. Soll auch der Raum unmittelbar unterhalb des Schwellers zur Hochvoltspeicherintegration genutzt werden, so wären die Montage der Hochvoltspeicherelemente und der Schwellerverkleidung nicht unabhängig voneinander realisierbar, so dass beim Ersatz der Schwellerverkleidung oder des Hochvoltspeicherelements immer beide Komponenten demontiert und nach Austausch einer der Komponenten auch beide Komponenten neu montiert werden müssten.

Der Erfindung liegt die Aufgabe zu Grunde, eine Verkleidung eines Außenschwellers, ein Energiespeicherelement eines Fahrzeuges sowie ein Fahrzeug zu schaffen, bei welchen die verwendeten Komponenten und insbesondere die Verkleidung und das Energiespeicherelement (i) besonders vielseitig einsetzbar sind, so dass z.B. für unterschiedliche Fahrzeugtypen dieselben Komponenten verwendet werden können, und (ii) leicht und unabhängig von einander montiert und demontiert werden können.

Die der Erfindung zu Grunde liegende Aufgabe wird bei einem Fahrzeug mit einer Verkleidung eines Außenschwellers erfindungsgemäß mit den Merkmalen des unabhängigen Patentanspruchs 1 gelöst. Vorteilhafte Weiterbildungen sind Gegenstand der abhängigen Ansprüche. Ein Fahrzeug mit einer Karosserie, welche einen Aussenschweller aufweist, mit einer Verkleidung für den Aussenschweller gemäß dem Oberbegriff des Anspruchs 1 ist aus dem Dokument US 6276109 bekannt.

Gemäß der vorliegenden Erfindung wird eine Verkleidung eines Außenschwellers eines Fahrzeuges und insbesondere eines Kraftfahrzeuges geschaffen mit einem Verkleidungsbereich und einem Montagebereich, die sich zwischen ersten und zweiten Enden der Verkleidung entlang einer Längserstreckungsrichtung X erstrecken. Der Montagebereich erstreckt sich in einer ersten Quererstreckungsrichtung Y senkrecht zur Längserstreckungsrichtung X weist und ein oder mehrere Montageelemente auf, um für einen montierten Zustand an einer Unterseite des Außenschwellers montierbar zu sein. Der Montagebereich umfasst abgewandt vom Verkleidungsbereich in der Längserstreckungsrichtung X eine Seitenkante, die zwischen Montageelementen ein oder mehrere Ausnehmungen aufweist, die so ausgebildet sind, dass sie die Seitenkante des Montagebereiches in der ersten Quererstreckungsrichtung Y abschnittsweise auf den Verkleidungsbereich zu zurückversetzt verläuft. Dadurch dass die Seitenkante des Montagebereiches der Verkleidung des Außenschwellers zwischen den Montageelementen des Montagebereiches durch die Ausnehmungen der Seitenkante abschnittsweise auf den Verkleidungsbereich zu zurückversetzt verläuft, wird zwischen den Montageelementen des Montagebereichs der Verkleidung Platz geschaffen, der zur Montage anderer Aggregate an der Unterseite des Fahrzeugs und insbesondere des Außenschwellers dienen kann. Durch das Vorsehen einer Verkleidung mit einer derartig undulierten Seitenkante kann erfindungsgemäß der Außenschweller des Fahrzeugs unabhängig davon, ob tatsächlich weitere Aggregate auf der Unterseite des Außenschwellers montiert werden, verkleidet werden. Auch ist durch die Aussparungen oder Ausnehmungen die Unabhängigkeit der Montage der Verkleidung des Außenschwellers gegenüber möglichen aber nicht obligatorischen weiteren Aggregaten an der Unterseite des Fahrzeuges möglich.

Besonders viel Raum wird einer Montage möglicher zusätzlicher Aggregate gegeben, und zwar bei unverändert guter Befestigungsmöglichkeit der Verkleidung des Außenschwellers an der Unterseite des Außenschwellers, wenn gemäß einer bevorzugten Ausführungsform der erfindungsgemäßen Verkleidung die Ausnehmungen der Seitenkante so ausgebildet sind, dass die Seitenkante des Montagebereiches in der ersten Quererstreckungsrichtung y abschnittsweise hinter die Montageelemente zurückversetzt verläuft.

Ein besonders hohes Maß an Stabilität wird erreicht, wenn möglichst viele Montagemöglichkeiten für zusätzliche Aggregate geschaffen werden. Deshalb ist es gemäß einer anderen Ausführungsform der erfindungsgemäßen Verkleidung vorgesehen, dass die Seitenkante des Montagebereiches zwischen je zwei direkt aufeinanderfolgend benachbarten Montageelementen eine Ausnehmung aufweist. Es können auch einzelne Positionen für Befestigungspunkte ausgelassen werden.

Die Befestigungselemente der Schwellerverkleidung und des Hochvoltspeicherelements können auch in einer Linie angeordnet sein.

Das Verkleiden des Außenschwellers kann besonders zuverlässig erfolgen, wenn sich gemäß einer weiteren bevorzugten Ausführungsform der erfindungsgemäßen Verkleidung der Verkleidungsbereich in einer zweiten Quererstreckungsrichtung Z senkrecht zur Längserstreckungsrichtung X erstreckt, um in einem montierten Zustand eine Außenseite des Außenschwellers entlang der Längserstreckungsrichtung X und der zweiten Quererstreckungsrichtung z außen und seitlich am Fahrzeug abzudecken.

Die Handhabbarkeit der erfindungsgemäßen Verkleidung gestaltet sich besonders einfach, wenn der Verkleidungsbereich und der Montagebereich miteinander in der Längserstreckungsrichtung X verbunden sind, insbesondere in materialeinstückiger und/oder in mehrteiliger oder mehrstückiger Art und Weise.

Eine weitere Vereinfachung der Montage ergibt sich, wenn gemäß einer anderen bevorzugten Ausführungsform der erfindungsgemäßen Verkleidung ein jeweiliges Montageelement ein Montageloch ist, welches zur Aufnahme eines Montagemittels ausgebildet ist. Dabei sind sämtliche bekannten Montagemittel denkbar, zum Beispiel Schrauben, Clips und dergleichen.

Gemäß einem weiteren Aspekt der vorliegenden Erfindung wird ein Energiespeicherelement eines Fahrzeuges und insbesondere eines Elektro- oder Hybridkraftfahrzeuges geschaffen. Dieses Energiespeicherelement ist erfindungsgemäß ausgebildet mit einem Gehäusebereich und einen Energiespeichermittel, welches im Inneren des Gehäusebereiches ausgebildet ist. Dabei erstreckt sich der Gehäusebereich entlang einer Längserstreckungsrichtung X. Der Gehäusebereich weist mindestens ein Befestigungselement auf, um für einen montierten Zustand mit einer Montageseite des Gehäusebereiches einer Unterseite des Fahrzeuges und insbesondere einer Unterseite eines Außenschwellers des Fahrzeuges zugewandt befestigbar zu sein.

Als Befestigungselemente kommen sämtliche im Stand der Technik bekannten Maßnahmen infrage. Besonders einfach gestaltet sich jedoch die Anbringung des Energiespeicherelements dann, wenn das mindestens eine Befestigungselement als ein Befestigungsloch im oder durch den Gehäusebereich ausgebildet ist, welches sich in einer Quererstreckungsrichtung Z senkrecht zur Längserstreckungsrichtung X erstreckt und welches zur Aufnahme eines Befestigungsmittels ausgebildet ist.

Um eine von anderen zu montierenden oder demontierenden Komponenten unabhängige Handhabung des Energiespeicherelements im Hinblick auf ein Anbringen oder Entfernen an einer Fahrzeugunterseite zu erreichen, ist es gemäß einer anderen bevorzugten Ausführungsform des erfindungsgemäßen Energiespeicherelements vorgesehen, dass auf der Montageseite des Gehäusebereiches im Bereich des mindestens einen Befestigungselementes mindestens ein Abstandselement ausgebildet ist, welches sich in der Quererstreckungsrichtung Z erstreckt und im montierten Zustand einen räumlichen Abstand zwischen der Montageseite des Gehäusebereiches und der Unterseite des Fahrzeuges schafft.

Besonders bevorzugt für die Ausgestaltung des erfindungsgemäßen Energiespeicherelementes ist der Bereich der so genannten Hochvoltspeicherelemente.

Gemäß einem anderen Aspekt der vorliegenden Erfindung wird ein Fahrzeug, insbesondere ein Kraftfahrzeug, geschaffen mit einer Karosserie, welche einen Außenschweller aufweist, und mit einer erfindungsgemäßen Verkleidung für den Außenschweller, wobei die Verkleidung über die Montageelemente des Montagebereiches an einer Unterseite des Außenschwellers angebracht ist.

Vorteilhafterweise ist das Fahrzeug so ausgebildet, dass es die Vorteile der erfindungsgemäßen Verkleidung und des erfindungsgemäßen Energiespeicherelements miteinander kombiniert, indem nämlich das Fahrzeug als Elektro- oder Hybridkraftfahrzeuges ausgebildet ist und mindestens ein erfindungsgemäßes Energiespeicherelement aufweist. Dabei ist das Energiespeicherelement mit der Montageseite des Gehäusebereiches des Energiespeicherelementes einer Unterseite des Fahrzeuges und insbesondere einer Unterseite des Außenschwellers des Fahrzeuges derart zugewandt montiert, dass ein jeweiliges Befestigungselement des Energiespeicherelementes, insbesondere zusammen mit einem Abstandselement, im Bereich einer Ausnehmung des Montagebereiches der Verkleidung des Außenschwellers angeordnet ist.

### Kurzbeschreibung der Figuren

Weitere Einzelheiten, Merkmale und Vorteile der Erfindung ergeben sich aus der nachfolgenden Beschreibung und den Figuren.
- Figur 1: eine schematische und perspektivische Seitenansicht eines erfindungsgemäßen Fahrzeuges unter Verwendung einer erfindungsgemäßen Verkleidung für einen Außenschweller.
- Figur 2: zeigt in isolierter Form und in perspektivischer Seitenansicht die Verkleidung der Ausführungsform aus Figur 1.
- Figuren 3 - 5: zeigen in geschnittener Ansicht von vorn eine Anordnung aus einem erfindungsgemäßen Außenschweller und einer erfindungsgemäßen Verkleidung im demontierten und im montierten Zustand.
- Figur 6: zeigt in geschnittener Ansicht von vorn eine andere Ausführungsform einer Verkleidung im montierten Zustand an einem Außenschweiler.
- Figur 7: zeigt in geschnittener Draufsicht die erfindungsgemäße Verkleidung aus der Ausführungsform gemäß Figur 6.
- Figuren 8, 8a - 8d: zeigen in geschnittener Draufsicht bzw. in Ansichten von vorn eine andere Ausführungsform der erfindungsgemäßen Verkleidung.
- Figuren 9 - 11: zeigen in perspektivischer Ansicht von unten verschiedene Ausführungsformen der erfindungsgemäßen Verkleidung im montierten Zustand an einem Außenschweller eines Fahrzeugs.
- Figuren 12a - c,13,14: zeigen teilweise geschnittene Ansichten von vorn und Draufsichten auf eine Ausführungsform eines erfindungsgemäßen Energiespeicherelements.
- Figuren 15, 16: zeigen in geschnittener Ansicht von vorn bzw. in geschnittener Draufsicht eine Verkleidung für einen Außenschweller in herkömmlicher Form.

Die Figuren zeigen in schematischer Art und Weise Ausführungsformen der vorliegenden Erfindung. Gleiche oder äquivalente sowie gleich oder äquivalent wirkende Komponenten werden mit denselben Bezugszeichen bezeichnet. Nicht in jedem Fall ihres Auftretens wird eine Detailbeschreibung wiederholt. Die in den Ansprüchen, den Figuren und der Beschreibung genannten Merkmale und weiteren Eigenschaften der Erfindung können beliebig voneinander getrennt oder miteinander kombiniert verwendet werden ohne den Kern der Erfindung zu verlassen.

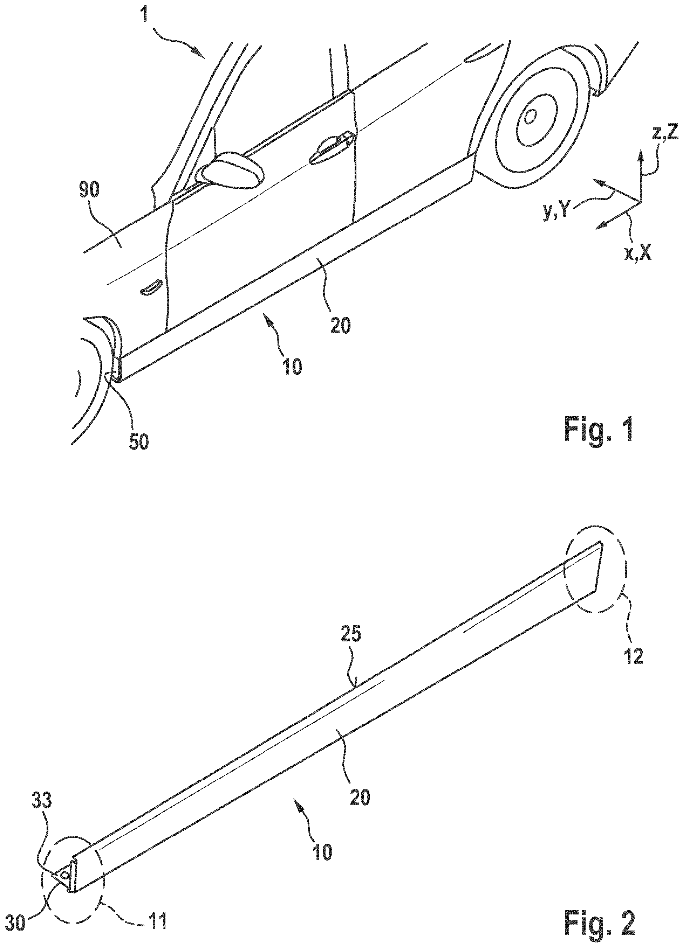

Die Figuren 1 und 2 zeigen in perspektivischer Seitenansicht eine Ausführungsform einer erfindungsgemäßen Verkleidung 10 eines Außenschwellers 50 eines Fahrzeuges 1 im am Außenschweller 50 montierten Zustand bzw. in isolierter Form.

Die Verkleidung 10 ist entlang einer Längserstreckungsrichtung X ausgedehnt, welche mit der x-Richtung identisch ist und mit der Fahrzeuglängsachse korrespondiert. Die Verkleidung 10 besitzt ein erstes oder vorderes Ende 11 und ein diesem gegenüberliegendes zweites oder hinteres Ende 12. Im Querschnitt, also in einem Schnitt parallel zur yz-Ebene, hat die Verkleidung 10 in etwa die Form eines horizontal gespiegelten L mit einem Verkleidungsbereich 20, der sich in etwa parallel zur xz-Ebene erstreckt, und mit einem Montagebereich 30, der sich in etwa parallel zur xy-Ebene erstreckt. Der Verkleidungsbereich 20 und der Montagebereich 30 erstrecken sich also oder verlaufen zwischen den ersten und zweiten Enden 11 bzw. 12 der Verkleidung 10 entlang der Längserstreckungsrichtung X. Zusätzlich erstreckt sich der Montagebereich 30 in der y-Richtung als erster Quererstreckungsrichtung Y senkrecht zur Längserstreckungsrichtung X.

Der Verkleidungsbereich 20 erstreckt sich in einer zweiten Quererstreckungsrichtung Z, welche mit der z-Richtung senkrecht zur Längserstreckungsrichtung X verläuft.

In dem in Figur 1 dargestellten montierten Zustand deckt der Verkleidungsbereich 20 der Verkleidung 10 eine Außenseite des Außenschwellers 50 entlang der Längserstreckungsrichtung X und in der zweiten Quererstreckungsrichtung Z außen und seitlich am Fahrzeug 1 ab.

Der Außenschweller 50 des Fahrzeugs 1 kann als Teil der Karosserie 90 des Fahrzeugs 1 aufgefasst werden und ist dort seitlich außen ausgebildet. Zur Montage der Verkleidung 10 seitlich am Außenschweller 50 ist der Montagebereich 30 der Verkleidung 10 mit einer Mehrzahl von Montageelementen 33 ausgebildet.

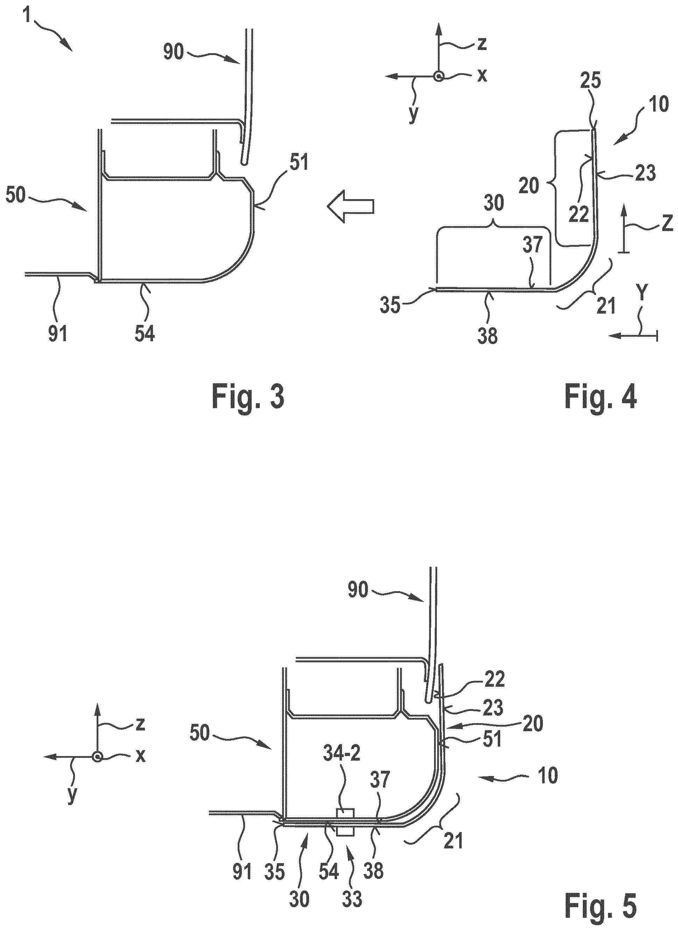

Die Details eines demontierten und eines montierten Zustandes sind im Zusammenhang mit den Figuren 3 bis 5 erläutert.

Figur 3 zeigt in geschnittener Vorderansicht, also mit einem Schnitt in einer yz-Ebene, einen Teil eines Fahrzeuges 1 und dessen Karosserie 90 mit einem Außenschweller 50, der eine Außenseite 51 sowie eine Unterseite 54 aufweist. Der Außenschweller 50 ist als Teil der Karosserie 90 mit einer Unterbodenverkleidung 91, 92 als einem Bauteil der Karosserie 90 verbunden.

Figur 4 zeigt eine Ausführungsform der erfindungsgemäßen Verkleidung 10 für einen Außenschweller 50, und zwar ebenfalls in geschnittener Ansicht von vorne, also wiederum mit einer zur yz-Ebene parallelen Schnittebene. In der Darstellung der Figur 4 nimmt die Verkleidung 10 bei diesem Schnitt die Form eines senkrecht gespiegelten Buchstaben L an. Die Verkleidung 10 wird gebildet von einem Verkleidungsbereich 20 im Wesentlichen in einer zur xz-Ebene parallelen Ebene und einem Montagebereich 30 im Wesentlichen in einer zur xy-Ebene parallelen Ebene. Der Montagebereich 30 und der Verkleidungsbereich 20 sind durch einen Übergangsbereich oder Verbindungsbereich 21 miteinander verbunden.

Der Verkleidungsbereich 20 weist eine Innenseite 22 und eine Außenseite 23 sowie eine Oberkante 25 auf. Der Montagebereich 30 besitzt eine Innenseite 37 und eine Außenseite 38 sowie eine Seitenkante 35.

Die Figuren 3 und 4 zeigen die Karosserie 90 und den Außenschweller 50 einerseits und die Verkleidung 10 für den Außenschweller 50 im demontierten, also räumlich separierten Zustand andererseits. Der von rechts nach links zeigende Pfeil deutet den Montageschritt der Verkleidung 10 am Außenschweller 50 an.

Figur 5 zeigt die Verkleidung 10 in am Außenschweller 50 montierten Zustand.

Durch die Annäherung der Verkleidung 10 aus der Figur 4 an den Außenschweller 50 aus der Figur 3 in Pfeilrichtung ist die Innenseite 22 des Verkleidungsbereichs 20 der Außenseite 51 des Schwellers 50 zugewandt und steht gegebenenfalls mit dieser in Kontakt. Zusätzlich ist die Innenseite 37 des Montagebereichs 30 der Verkleidung 10 der Unterseite 54 des Außenschwellers 50 zugewandt und steht gegebenenfalls mit dieser in Kontakt.

Zur Befestigung der Verkleidung 10 mit der Innenseite 37 des Montagebereichs 30 der Unterseite 54 des Außenschwellers 50 zugewandt weist der Montagebereich 30 eine Mehrzahl von Montageelementen 33 auf. Diese können zum Beispiel aus einem Montageloch 34-1 in Kombination mit einem Montagemittel 34-2, zum Beispiel einem Bolzen oder einer Schraube oder dergleichen, gebildet sein.

In Figur 5 ist im Querschnitt nur ein Montagemittel 34-2 in Form eines Bolzens oder einer Schraube schematisch dargestellt, welches den Montagebereich 30 und die Unterseite 54 des Außenschwellers 50 durchdringt und beide Elemente miteinander halternd verbindet.

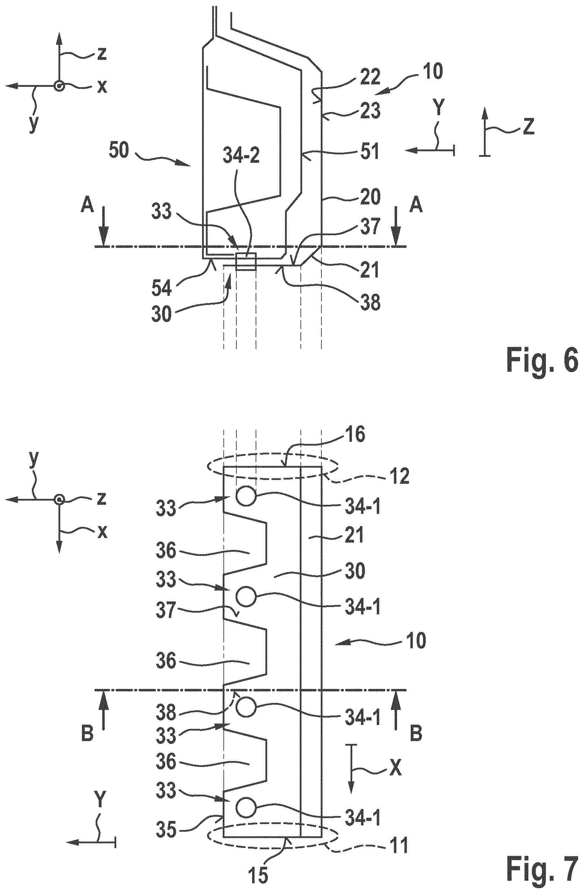

Figur 6 zeigt in geschnittener Ansicht von vorne, also mit einer zur yz-Ebene parallelen Ebene als Schnittebene, eine Ausführungsform der erfindungsgemäßen Verkleidung 10 im montierten Zustand an einem Außenschweller 50. Im montierten Zustand ist die Innenseite 22 des Verkleidungsbereichs 20 der Verkleidung 10 wiederum der Außenseite 51 des Schwellers 50 zugewandt, wogegen die Außenseite 23 von der Außenseite 51 des Außenschwellers 50 abgewandt ist.

An den Verkleidungsbereich 20 schließt sich, vermittelt durch den Übergangsbereich 21, der Montagebereich 30 an, der im montierten Zustand der Verkleidung 10 so angeordnet ist, dass seine Innenseite 37 der Unterseite 54 des Außenschwellers 50 zugewandt ist. Die Außenseite 38 des Montagebereichs 30 ist dagegen von der Unterseite 54 des Außenschwellers 50 abgewandt. Schematisch angedeutet ist ein Montagemittel 34-2 in Form einer Schraube, eines Bolzens oder einer Buchse als Teil des Montageelements 33 des Montagebereichs 30 der Verkleidung 10.

Figur 7 zeigt eine geschnittene Draufsicht auf die Verkleidung 10 aus Figur 6 in isolierter Form, wobei in Figur 6 die zu Grunde liegende Schnittebene A-A angedeutet ist.

Aus dieser Darstellung ergibt sich, dass die Verkleidung 10 insgesamt und insbesondere der Montagebereich 30 sich in der x-Richtung als Längserstreckungsrichtung X zwischen den ersten und zweiten Enden 11 bzw. 12 erstrecken. Dabei weist der Montagebereich 30 am ersten Ende 11 eine Vorderkante 15 und am zweiten Ende 12 eine Hinterkante 16 sowie eine im Wesentlichen in der Längserstreckungsrichtung X verlaufende Seitenkante 35 auf. Die Seitenkante 35 ist allerdings nicht durchgehend linear sondern besitzt erfindungsgemäß zwischen aufeinanderfolgenden Montageelementen 33, welche Montagelöcher 34-1 aufweisen, Ausnehmungen 36, die so ausgebildet sind, dass die Seitenkante 35 des Montagebereichs 30 in der y-Richtung als erster Quererstreckungsrichtung Y abschnittsweise auf den Verkleidungsbereich 20 zu zurückversetzt verläuft.

Bei der Ausführungsform der Figur 7 besitzen die Ausnehmungen 36 des Montagebereichs 30 eine Trapezform, die sich in Richtung auf den Übergangsbereich 21 und insbesondere in Richtung auf den Montagebereich 20 der Verkleidung 10 zu verjüngt. Die hintere Kante der Ausnehmung 36 in Richtung auf den Übergangsbereich 21 oder den Verkleidungsbereich 20 verläuft hinter den Montageelementen 33 mit den Montagelöchern 34-1. Es sind auch anders gestaltete Ausnehmungen 36 denkbar, z.B. in Rechteck-, Sägezahn- oder Wellenform.

Bei der Ausführungsform der Figuren 6 und 7 ist zwischen je zwei direkt benachbarten Montageelementen 33 mit Montagelöchern 34-1 jeweils eine Ausnehmung 36 vorgesehen. Dies ist jedoch nicht zwingend.

In Figur 7 ist mit B-B eine Schnittebene angedeutet, über welche die Ansicht der Figur 6 definiert ist.

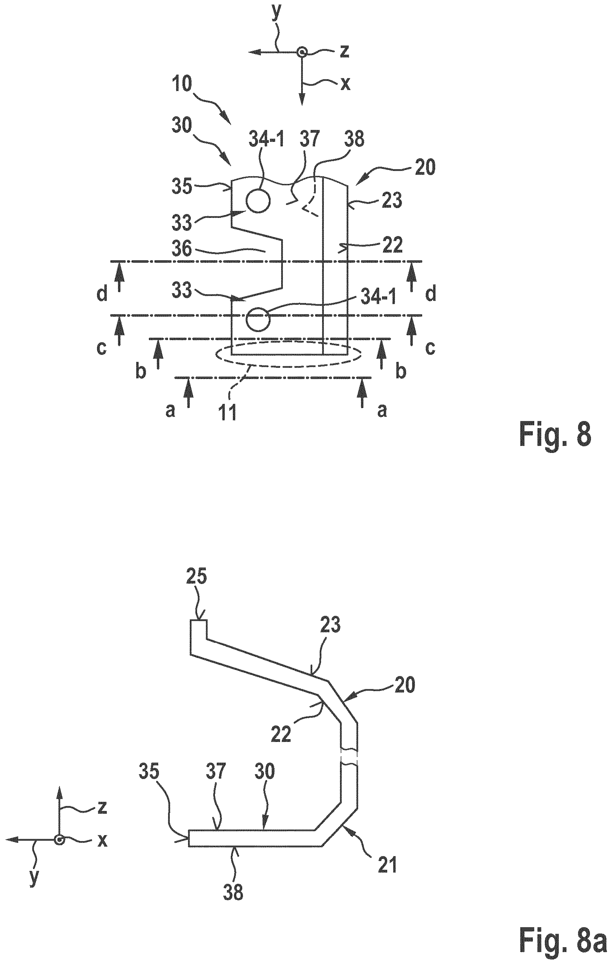

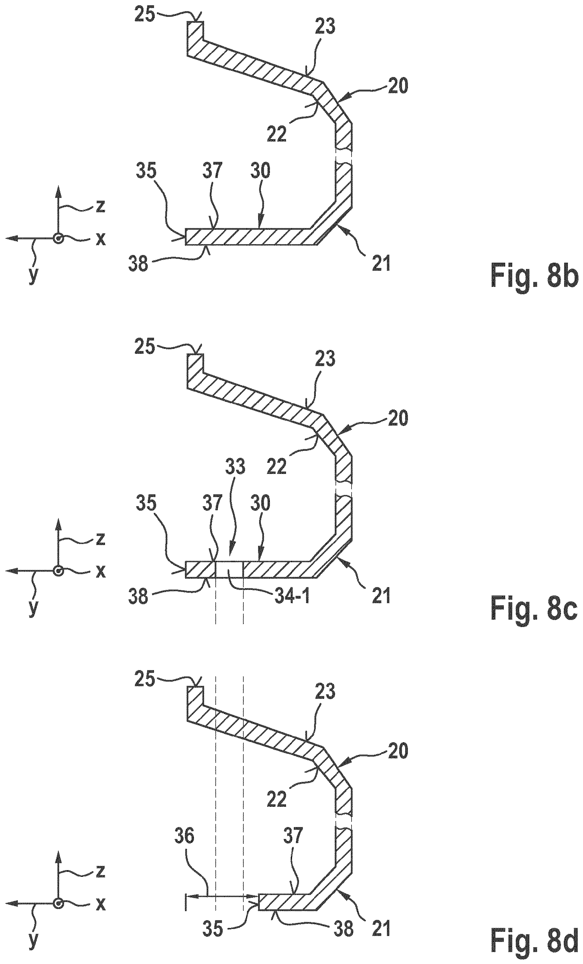

In den Figuren 8 sowie 8a bis 8d wird eine andere Ausführungsform der erfindungsgemäßen Verkleidung 10 für einen Außenschweller 50 eines Fahrzeugs 1 beschrieben.

Figur 8 zeigt eine geschnittene Draufsicht mit einer zur xy-Ebene parallelen Ebene als Schnittebene. Die Draufsicht der Figur 8 entspricht etwa der Draufsicht aus Figur 7. In Figur 8 sind mit a-a, b-b, c-c sowie d-d verschiedene Schnittebenen für die Ansichten der Figuren 8a bis 8d angedeutet.

Aus der Gesamtschau der Figuren 8 sowie 8a bis 8d ergibt sich, dass diese Ausführungsform der erfindungsgemäßen Verkleidung 10 aus einem Teil, also materialeinstückig gefertigt ist. Eine derartige Ausführungsform ist besonders zuverlässig, jedoch nicht zwingend.

Ferner ergibt sich, dass die Ausnehmungen 36 des Montagebereichs 30 der Verkleidung 10 dazu führen, dass die Seitenkante 35 des Montagebereichs 30 in Richtung auf den Übergangsbereich 21 oder den Verkleidungsbereich 20 hinter die Montageelemente 33 mit den Montagelöchern 34-1 zurückversetzt verläuft.

Die Figuren 5 bis 11 zeigen in perspektivischer Ansicht von unten andere Ausführungsformen der erfindungsgemäßen Verkleidung 10 für einen Außenschweller 50 in Kombination mit einem erfindungsgemäßen Energiespeicherelement 60, zum Beispiel in Form einer Lithiumionenbatterieanordnung.

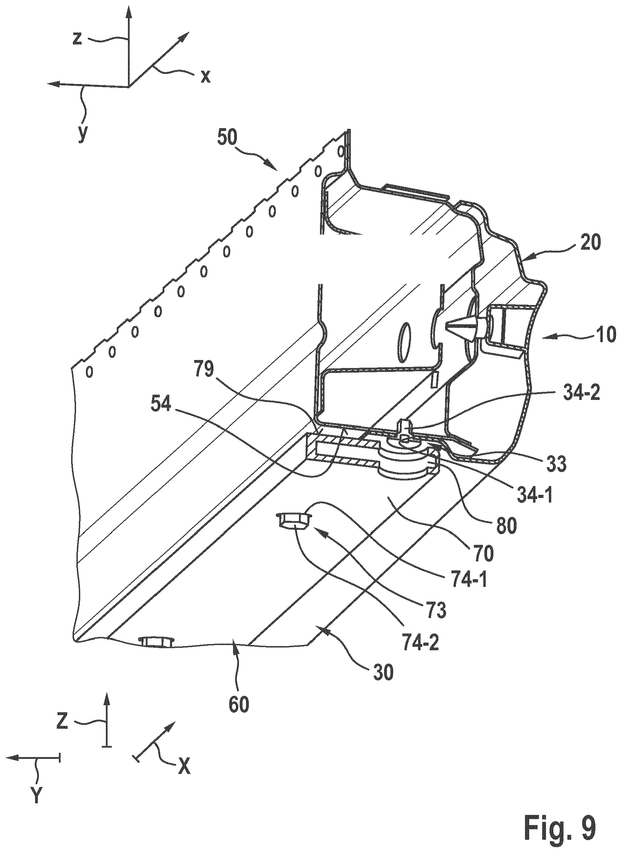

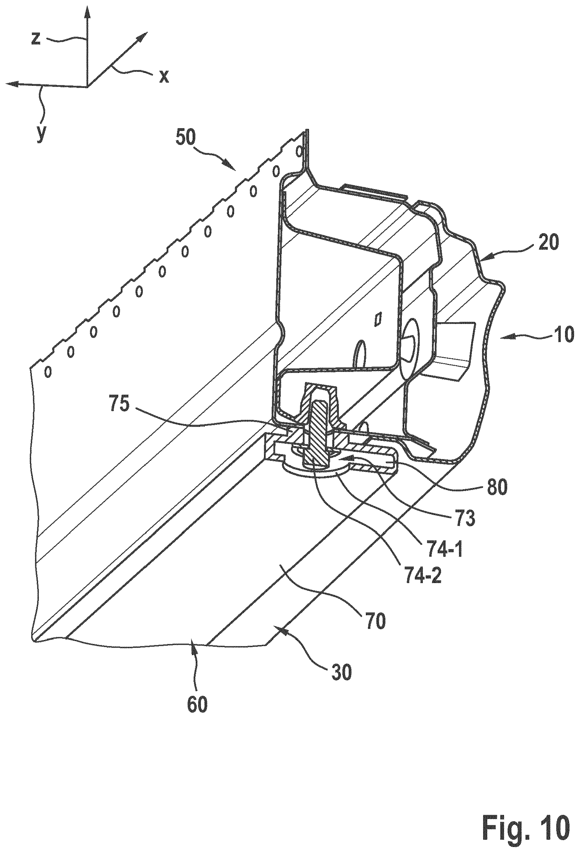

Bei den in den Figuren 9 und 10 gezeigten Ausführungsformen kommt erfindungsgemäß die Unabhängigkeit der Montage von erfindungsgemäßer Verkleidung 10 und erfindungsgemäßem Energiespeicherelement 60 zum Tragen.

Das erfindungsgemäße Energiespeicherelement 60 besitzt dieselbe Längserstreckungsrichtung in x-Richtung wie die Verkleidung 10 mit dem Verkleidungsbereich 20 und dem Montagebereich 30. Diese Längserstreckungsrichtung entspricht auch der Fahrzeuglängsrichtung.

Das erfindungsgemäße Energiespeicherelement 60 besitzt einen Gehäusebereich 70, in dessen Inneren ein Speichermittel 80 für elektrische Energie aufgenommen ist. Das erfindungsgemäße Energiespeicherelement 60 ist in den Figuren 9 und 10 mit seiner Oberseite oder Montageseite 79 über Befestigungselemente 73, die gebildet werden, jeweils von einem Befestigungsloch 74-1 und einem das Befestigungsloch 74-1 durchmessenden Befestigungsmittel 74-2, zum Beispiel einem Bolzen, einer Buchse oder einer Schraube, befestigt. Das heißt, die Montageseite 79 des erfindungsgemäßen Energiespeicherelements 60 ist der Unterseite 54 des Außenschwellers 50 im montierten Zustand zugewandt.

Jedoch ist im montierten Zustand des erfindungsgemäßen Energiespeicherelements 60 die Montageseite 79 des Energiespeicherelements 60 zur Unterseite 54 des Außenschwellers 50 beabstandet, nämlich indem gemäß Figur 10 das Befestigungselement 73 jeweils noch ein Abstandselement 75, zum Beispiel in Form einer Hülse oder eines Kragens, aufweist. Dadurch liegt die Montageseite 79 des Energiespeicherelements 60 nicht auf der Unterseite 54 des Außenschwellers 50 auf.

Diese Beabstandung bewirkt auch eine Beabstandung der Montageseite 79 des Energiespeicherelements 60 von der Außenseite 38 des Montagebereichs 30 der erfindungsgemäßen Verkleidung 10. Das bedeutet, dass das Energiespeicherelement 60 und die Verkleidung 10 mechanisch nicht oder höchstens gering kontaktiert sind, so dass das Energiespeicherelement 60 und die Verkleidung 10 am oder vom Außenschweller 50 unabhängig voneinander montiert bzw. demontiert werden können.

Als Folge davon ergibt sich die Möglichkeit, eine einzige Verkleidung 10 vorzusehen. Diese sind dann einerseits für herkömmliche Fahrzeuge mit Verbrennungsmotor geeignet, bei welchen keine Energiespeicherelemente 60 vorgesehen sind. Sie sind aber auch geeignet für Hybrid- oder Elektrofahrzeuge, bei welchen derartige Energiespeicherelemente 60 ausgebildet sind. Dies reduziert die Notwendigkeit, für unterschiedliche Fahrzeugtypen oder Antriebsarten unterschiedliche Verkleidungen 10 vorhalten zu müssen.

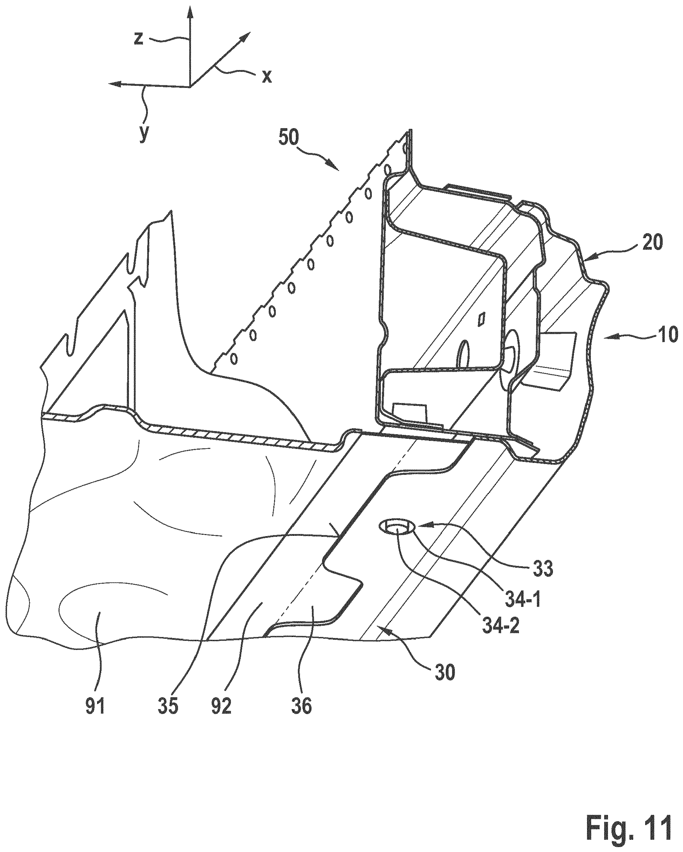

Aus Figur 11 wird deutlich, dass bei demontiertem Energiespeicherelement 60 die Seitenkante 35 des Montagebereichs 30 der erfindungsgemäßen Verkleidung 10 durch das Vorsehen von Ausnehmungen 36 auf den Übergangsbereich 21 und insbesondere auf den Verkleidungsbereich 20 der Verkleidung 10 hin zurückversetzt verläuft.

In dieser Darstellung ist auch die Unterbodenverkleidung 91, 92 der Karosserie 90 in Verbindung mit dem Außenschweller 50 zu erkennen. Die Unterbodenverkleidung 91, 92 ist zwischen der Unterseite 54 des Außenschwellers 50 und der Oberseite 38 des Montagebereichs 30 der Verkleidung 10 eingefügt, um insbesondere die Unterseite 54 des Außenschwellers 50 im Bereich der Ausnehmungen 36 des Montagebereiches 30 abzudecken und somit gegen Verschmutzung, Wasser und mechanische Beschädigung zu schützen.

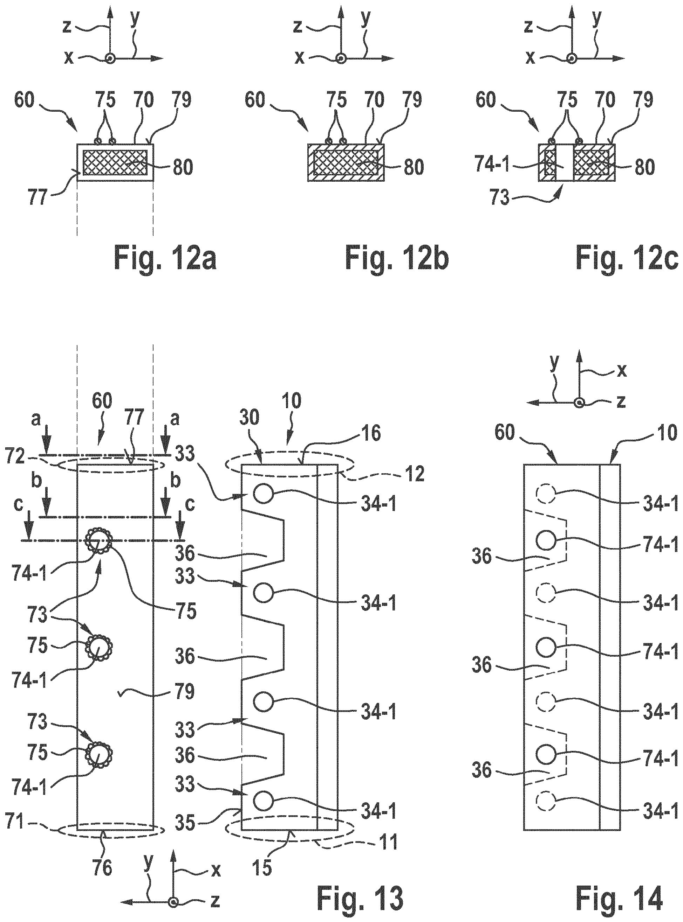

Es sind erfindungsgemäß gerade die Ausnehmungen 36 im Montagebereich 30 der erfindungsgemäßen Verkleidung 10, welche die Vorteile der Erfindung mit sich bringen. Dies wird im Zusammenhang mit den Figuren 12a bis 12c, 13 und 14 stärker verdeutlicht.

Diese Figuren zeigen ein erfindungsgemäßes Energiespeicherelement 60 in teilweise geschnittener Vorder- und Draufsicht und insbesondere in Kombination mit einer Ausführungsform der erfindungsgemäßen Verkleidung 10.

Diese Ausführungsform des erfindungsgemäßen Energiespeicherelementes 60 erstreckt sich mit seinem Gehäusebereich 70 in derselben Längserstreckungsrichtung x wie die ebenfalls dort dargestellte Ausführungsform der erfindungsgemäßen Verkleidung 10. Das Energiespeicherelement 60 mit seinem Gehäusebereich 70 besitzt ein erstes oder vorderes Ende 71 und ein zweites oder hinteres Ende 72 mit einer Vorderkante 76 bzw. mit einer Hinterkante 77. Die Oberseite des Gehäusebereiches 70 dient als Montageseite 79 zur Anbringung des Energiespeicherelements 60 an der Unterseite 54 des Außenschwellers 50.

Der Gehäusebereich 70 weist in seinem Inneren ein Speichermittel 80 für elektrische Energie auf, welches in den Figuren 12a bis 12c nur schematisch angedeutet ist. Die Ansichten der Figuren 12a bis 12c ergeben sich aus den in der Figur 13 angedeuteten Schnittebenen a-a, b-b sowie c-c.

Der Gehäusebereich 70 weist in bestimmten Abständen eine Mehrzahl von Befestigungselementen 73 jeweils mit einem Befestigungsloch 74-1 auf. Durch die Befestigungslöcher 74-1 können zur Montage entsprechende Befestigungsmittel 74-2, zum Beispiel in Form von Schrauben oder Bolzen, eingefügt werden. Gemäß den Figuren 9 und 10 wird bei der Montage die Montageseite 79 der Außenseite 38 des Montagebereichs 30 der Verkleidung 10 zugewandt.

Figur 13 zeigt die Ausführungsform des erfindungsgemäßen Energiespeicherelements 60 und die Ausführungsform der erfindungsgemäßen Verkleidung 10 in voneinander separierter Form, wobei die Vorderkanten 15, 76 und die Hinterkanten 16, 77 jeweils bündig angeordnet sind. Aus dieser Darstellung ergibt sich, dass die Befestigungselemente 73 mit den Befestigungslöchern 74-1 in x-Richtung zu den Ausnehmungen 36 des Montagebereichs 30 der Verkleidung 10 ausgerichtet sind.

Durch Zusammenfügen des erfindungsgemäßen Energiespeicherelements 60 und der Verkleidung 10 gemäß Figur 14 erfolgt auch die Ausrichtung der Befestigungslöcher 74-1 der Befestigungsmittel 73 des Gehäusebereiches 70 des Energiespeicherelements 60 im Bezug auf die y-Richtung.

Aus der Ansicht von unten gemäß Figur 14 ergibt sich, dass die Befestigungslöcher 74-1 direkt in den Lücken der Ausnehmungen 36 des Montagebereichs 30 zur Anlage kommen. Über die in den Figuren 12a bis 12c und 13 dargestellten Abstandselemente 75 wird erreicht, dass bei Montage an einer Unterseite 54 eines Außenschwellers 50 keine oder nur eine geringe mechanische Berührung des Energiespeicherelements 60 und der Verkleidung 10 im montierten Zustand am Außenschweller 50 erfolgt, so dass diese Elemente unabhängig voneinander montiert und demontiert werden können.

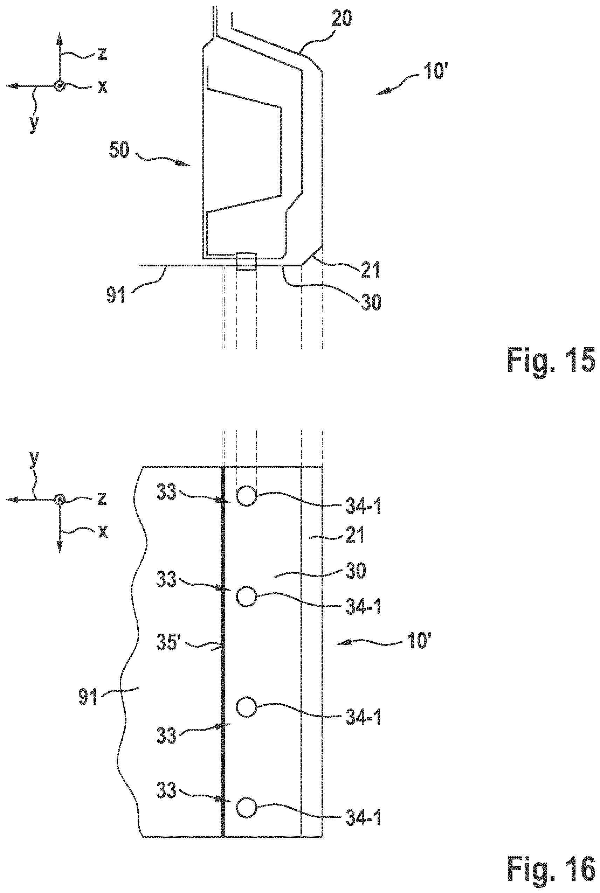

Die Figuren 15 und 16 zeigen eine herkömmliche Verkleidung 10', von welcher bei der Entwicklung der vorliegenden Erfindung ausgegangen wurde.

In Figur 15 ist die herkömmliche Verkleidung 10' an einer Unterseite 54 des Außenschwellers 50 über entsprechende Montageelemente 33 montiert. Im Gegensatz zur vorliegenden Erfindung verläuft die Seitenkante 35' der herkömmlichen Verkleidung 10 zwischen direkt benachbarten Montageelementen 33 des Montagebereichs 30 strikt linear und ohne das Vorsehen von Ausnehmungen 36.

Würde also diese herkömmliche Verkleidung 10' zusammen mit einem Energiespeicherelement 60, wie es zum Beispiel in den Figuren 9, 10 sowie 12a bis 12c und 13 dargestellt ist, verwendet werden, so käme ein direkter Kontakt zwischen dem Energiespeicherelement 60 und dessen Montageseite 79 mit der Außenseite 38 des Montagebereichs 30 der herkömmlichen Verkleidung 10' zustande, so dass eine bereits montierte herkömmliche Verkleidung 10' nur demontiert werden könnte, wenn vorher das Energiespeicherelement 60 demontiert würde. Erfindungsgemäß wird dieser zusätzliche Montage-/ Demontageaufwand vorteilhafterweise vermieden.

Diese und weitere Aspekte und Vorteile der vorliegenden Erfindung werden mit den folgenden Zusammenhängen weiter erläutert:
Bei der Entwicklung der vorliegenden Erfindung wurde einerseits davon ausgegangen, dass bei Außenschwellern 50 und Schwellersystemen insgesamt der Schweller 50 im Karosseriebau zum Beispiel durch Schweißen ggf. zusammengesetzt und montiert wird. Dabei sind auch Schwellerverkleidungen bekannt, welche bei der Montage in unterschiedlichen Ausführungsformen anmontiert werden können.

Des Weiteren wird davon ausgegangen, dass bei der Integration von Energiespeicherelementen und insbesondere von Hochvoltspeicherelementen für Hybrid- oder Elektrofahrzeuge die Speicherelemente von einer Schwellerverkleidung separiert und räumlich lateral versetzt angeordnet werden, so dass die Speicherelemente und die Schwellerverkleidung nebeneinander angeordnet sind.

Bei diesem herkömmlichen Vorgehen wären zusätzliche Varianten für die Schwellerverkleidung notwendig, nämlich einmal für Fahrzeuge ausschließlich mit Brennkraftmaschinen und für Fahrzeuge, die alternativ oder zusätzlich elektrisch betrieben werden und daher entsprechende Energiespeicherelemente benötigen. Das bedeutet, dass herkömmlicherweise zusätzliche Karosserievarianten mit entsprechend höheren Kosten notwendig wären. Darüber hinaus ergäbe sich auch eine verbreiterte Karosserieanbindung im Bereich des Schwellers durch das Nebeneinanderanordnen von Schwellerverkleidung und Energiespeicherelementen.

Als weitere Nachteile bei der Kombination mit herkömmlichen Maßnahmen ergibt sich ein höheres Gewicht bei gleichzeitigem Bauraumverlust. Das kann sich auch nachteilig im Hinblick auf die mögliche Reichweite des Fahrzeugs auswirken.

Ein Ansatz der vorliegenden Erfindung ist also, dass keine einheitliche Schnittstelle zwischen Karosserie und den Anbauteilen existiert.

Bei der Anbindung eines Energiespeicherelements über Anschraublaschen ergibt sich eine nur schlechte Bindung oder Anbindung des Energiespeicherelements. Ein Abreißen der Laschen bei einem Unfallszenario ist bei bestimmten Fahrzeugtypen wahrscheinlich.

### Bezugszeichenliste:

- 1: Fahrzeug
- 10: Verkleidung
- 10': herkömmliche Verkleidung
- 11: erstes Ende
- 12: zweites Ende
- 15: Vorderkante
- 16: Hinterkante
- 20: Verkleidungsbereich
- 21: Übergangsbereich
- 22: Innenseite
- 23: Außenseite
- 25: Oberkante
- 30: Montagebereich
- 31: erstes Ende
- 32: zweites Ende
- 33: Montageelement
- 34-1: Montageloch
- 34-2: Montagemittel
- 35: Seitenkante
- 35': herkömmliche Seitenkante
- 36: Ausnehmung
- 50: Außenschweller
- 54: Unterseite
- 60: Energiespeicherelement, Hochvoltspeicherelement
- 70: Gehäusebereich
- 71: erstes Ende
- 72: zweites Ende
- 73: Befestigungselement
- 74-1: Befestigungsloch
- 74-2: Befestigungsmittel
- 75: Abstandselement
- 76: Vorderkante
- 77: Hinterkante
- 79: Montageseite
- 80: Speichermittel, Energiespeichermittel
- 90: Karosserie
- 91: Unterbodenverkleidung
- 92: Unterbodenverkleidung

- x: Raumrichtung
- X: Längserstreckungsrichtung
- y: Raumrichtung
- Y: erste Querstreckungsrichtung
- z: Raumrichtung
- Z: zweite Querstreckungsrichtung

## Patentansprüche

1. Fahrzeug (1), insbesondere Kraftfahrzeug,
- mit einer Karosserie (90), welche einen Außenschweller (50) aufweist, und
- mit einer Verkleidung (10) für den Außenschweller (50), mit einem Verkleidungsbereich (20) und einem Montagebereich (30), die sich zwischen ersten und zweiten Enden (11, 12) der Verkleidung (10) entlang einer Längserstreckungsrichtung (X) erstrecken,
- wobei sich der Montagebereich (30) in einer ersten Quererstreckungsrichtung (Y) senkrecht zur Längserstreckungsrichtung (X) erstreckt und Montageelemente (33) aufweist, um für einen montierten Zustand an einer Unterseite (54) des Außenschwellers (50) montierbar zu sein, und
- wobei der Montagebereich (30) abgewandt vom Verkleidungsbereich (20) in der Längserstreckungsrichtung (X) eine Seitenkante (35) umfasst, die zwischen Montageelementen (33) Ausnehmungen (36) aufweist, die so ausgebildet sind, dass die Seitenkante (35) des Montagebereiches (30) in der ersten Quererstreckungsrichtung (y) abschnittsweise auf den Verkleidungsbereich (20) zu zurückversetzt verläuft,
- **dadurch gekennzeichnet dass** die Verkleidung (10) über die Montageelemente (33) des Montagebereiches (30) an der Unterseite (54) des Außenschwellers (50) angebracht ist wobei das Fahrzeug als Elektro- oder Hybridkraftfahrzeug ausgebildet ist und mindestens ein Energiespeicherelement (60) aufweist,
- wobei das Energiespeicherelement (60) mit einer Montageseite (79) eines Gehäusebereiches (70) des Energiespeicherelementes (60) einer Unterseite des Fahrzeuges (1) und insbesondere einer Unterseite (54) des Außenschwellers (50) des Fahrzeuges (1) derart zugewandt montiert ist,
- dass ein jeweiliges Befestigungselement (73) des Energiespeicherelementes (60), insbesondere zusammen mit einem Abstandselement (75), im Bereich einer Ausnehmung (36) des Montagebereiches (30) der Verkleidung (10) des Außenschwellers (50) angeordnet ist.

2. Fahrzeug (1) nach Anspruch 1, wobei bei der Verkleidung (10) die Ausnehmungen (36) der Seitenkante (35) so ausgebildet sind, dass die Seitenkante (35) des Montagebereiches (30) in der ersten Quererstreckungsrichtung (Y) abschnittsweise hinter die Montageelemente (33) zurückversetzt verläuft.

3. Fahrzeug (1) nach einem der vorangehenden Ansprüche, wobei bei der Verkleidung (10) die Seitenkante (35) des Montagebereiches (30) zwischen je zwei aufeinanderfolgend benachbarten Montageelementen (33) eine Ausnehmung (36) aufweist.

4. Fahrzeug (1) nach einem der vorangehenden Ansprüche, wobei bei der Vekleidung (10) sich der Verkleidungsbereich (20) in einer zweiten Quererstreckungsrichtung (Z) senkrecht zur Längserstreckungsrichtung (X) erstreckt, um in einem montierten Zustand eine Außenseite (51) des Außenschwellers (50) entlang der Längserstreckungsrichtung (X) und der zweiten Quererstreckungsrichtung (Z) außen und seitlich am Fahrzeug (1) abzudecken.

5. Fahrzeug (1) nach einem der vorangehenden Ansprüche, wobei bei der Vekleidung (10) der Verkleidungsbereich (20) und der Montagebereich (30) miteinander in der Längserstreckungsrichtung (X) verbunden sind, insbesondere in materialeinstückiger oder in mehrstückiger Art und Weise.

6. Fahrzeug (1) nach einem der vorangehenden Ansprüche, wobei bei der Verkleidung (10) ein jeweiliges Montageelement (33) ein Montageloch (34-1) ist, welches zur Aufnahme eines Montagemittels (34-2) ausgebildet ist.

7. Fahrzeug (1) nach einem der vorangehenden Ansprüche, wobei das Energiespeicherelement den Gehäusebereich (70) und ein Energiespeichermittel (80) aufweist welches im Inneren des Gehäusebereiches (70) ausgebildet ist,
wobei sich der Gehäusebereich (70) entlang einer Längserstreckungsrichtung (X) erstreckt und
wobei der Gehäusebereich (70) das mindestens ein Befestigungselement (73) aufweist, um für einen montierten Zustand mit der Montageseite (79) des Gehäusebereiches (70) der Unterseite des Fahrzeuges (1) und insbesondere der Unterseite (54) des Außenschwellers (50) des Fahrzeuges (1) zugewandt befestigbar zu sein.

8. Fahrzeug (1) nach Anspruch 7, wobei bei dem Energiespeicherelement das mindestens eine Befestigungselement (73) als ein Befestigungsloch (74-1) im oder durch den Gehäusebereich (70) ausgebildet ist, welches sich in einer Quererstreckungsrichtung (Z) senkrecht zur Längserstreckungsrichtung (X) erstreckt und welches zur Aufnahme eines Befestigungsmittels (74-2) ausgebildet ist.

9. Fahrzeug (1) nach einem der Ansprüche 7 und 8, wobei bei dem Energiespeicherelement auf der Montageseite (79) des Gehäusebereiches (70) im Bereich des mindestens einen Befestigungselementes (73) mindestens ein Abstandselement (75) ausgebildet ist, welches sich in der Quererstreckungsrichtung (Z) erstreckt und im montierten Zustand einen räumlichen Abstand zwischen der Montageseite (79) des Gehäusebereiches (70) und der Unterseite des Fahrzeuges (1) schafft.

10. Fahrzeug (1) nach einem der Ansprüche 7 bis 9, wobei das Energiespeicherelement als Hochvoltspeicherelement ausgebildet ist.

## Claims

1. A vehicle (1), in particular a motor vehicle,
- having a body (90) with an outer sill (50),
and
- having a covering (10) for the outer sill (50),
with a covering region (20) and a mounting region (30), which extend between first and second ends (11, 12) of the covering (10) along a direction of longitudinal extension (X),
- the mounting region (30) extending in a first direction of transverse extension (Y) perpendicular to the direction of longitudinal extension (X) and having mounting elements (33) in order to be able to be mounted on an underside (54) of the outer sill (50) for a mounted state, and
- the mounting region (30) comprising a lateral edge (35) facing away from the covering region (20) in the direction of longitudinal extension (X), the lateral edge (35) having recesses (36) between mounting elements (33) which are formed such that sections of the lateral edge (35) of the mounting region (30) extend in a recessed manner in the first direction of transverse extension (y) towards the covering region (20),
- **characterised in that**
the covering (10) is positioned via the mounting elements (33) of the mounting region (30) on the underside (54) of the outer sill (50), the vehicle being designed as an electric or hybrid motor vehicle and having at least one energy storage element (60),
- the energy storage element (60) being mounted with a mounting side (79) of a housing region (70) of the energy storage element (60) facing towards an underside of the vehicle (1) and in particular an underside (54) of the outer sill (50) of the vehicle (1) in such a manner
- that a respective attachment element (73) of the energy storage element (60), in particular together with a spacer element (75), is arranged in the region of a recess (36) of the mounting region (30) of the covering (10) of the outer sill (50).

2. A vehicle (1) according to claim 1, the recesses (36) in the lateral edge (35) of the covering (10) being designed such that sections of the lateral edge (35) of the mounting region (30) extend in a recessed manner in the first direction of transverse extension (Y) behind the mounting elements (33).

3. A vehicle (1) according to either of the preceding claims, the lateral edges (35) of the mounting region (30) in the covering (10) having a recess (36) between every two consecutively adjacent mounting elements (33).

4. A vehicle (1) according to any of the preceding claims, the covering region (20) of the covering (10) extending in a second direction of transverse extension (Z) perpendicular to the direction of longitudinal extension (X) in order to cover, in a mounted state, an outer side (51) of the outer sill (50) along the direction of longitudinal extension (X) and the second direction of transverse extension (Z) on the exterior and side of the vehicle (1).

5. A vehicle (1) according to any of the preceding claims, the covering region (20) and the mounting region (30) of the covering (10) being joined together in the direction of longitudinal extension (X), in particular in such a manner as to form one piece of material or multiple pieces.

6. A vehicle (1) according to any of the preceding claims, a respective mounting element (33) in the covering (10) being a mounting hole (34-1) which is designed to hold a mounting means (34-2).

7. A vehicle (1) according to any of the preceding claims, the energy storage element having the housing region (70) and an energy storage medium (80) which is formed in the interior of the housing region (70), the housing region (70) extending along a direction of longitudinal extension (X) and the housing region (70) having the at least one attachment element (73) in order to be able to be attached to the mounting side (79) of the housing region (70) facing towards the underside of the vehicle (1) and in particular the underside (54) of the outer sill (50) of the vehicle (1) for a mounted state.

8. A vehicle (1) according to Claim 7, the at least one attachment element (73) of the energy storage element being formed as an attachment hole (74-1) in or through the housing region (70) which extends in a direction of transverse extension (Z) perpendicular to the direction of longitudinal extension (X) and which is designed to accommodate an attachment means (74-2).

9. A vehicle (1) according to either of Claims 7 and 8, at least one spacer element (75) being formed in the energy storage element on the mounting side (79) of the housing region (70) in the region of the at least one attachment element (73), which spacer element (75) extends in the direction of transverse extension (Z) and, in the mounted state, creates a spatial distance between the mounting side (79) of the housing region (70) and the underside of the vehicle (1).

10. A vehicle (1) according to any of claims 7 to 9, the energy storage element being designed as a high-voltage storage element.

## Revendications

1. Véhicule (1) en particulier, véhicule automobile comprenant :
- une carrosserie (90) comportant un seuil extérieur (50), et
- un habillage (10) pour le seuil externe (50),
une zone d'habillage (20) et une zone de montage (30) qui s'étendent entre une première extrémité et une seconde extrémité (11, 12) de l'habillage (10) le long d'une direction d'extension longitudinale (X),
- la zone de montage (30) s'étendant, dans une première direction d'extension transversale (Y), perpendiculairement à la direction d'extension longitudinale (X), et comportant des éléments de montage (33) destinés à être montés dans un premier état monté, sur la face inférieure (54) du seuil externe (50), et
- la zone de montage (30) comprenant à l'opposé de la zone d'habillage (20) dans la direction d'extension longitudinale (X) un bord latéral (35) qui comporte, entre des éléments de montage (33) des évidements (36) qui sont réalisés de sorte que le bord latéral (35) de la zone de montage (30) soit situé dans la première direction d'extension transversale (Y) par segments en retrait par rapport à la zone d'habillage (20),
**caractérisé en ce que**
- l'habillage (10) est positionné par les éléments de montage (33) de la zone de montage (30) sur la face inférieure (54) du seuil externe (50), le véhicule étant réalisé sous la forme d'un véhicule électrique ou d'un véhicule hybride et comprenant au moins un élément accumulateur d'énergie,
- l'élément accumulateur d'énergie (60) est monté par une face de montage (79) d'une zone de boîtier (70) de cet élément accumulateur d'énergie (60) en étant tourné vers la face inférieure du véhicule (1), et en particulier vers la face inférieure (54) du seuil externe (50) du véhicule (1), de sorte qu'
- un élément de fixation respectif (73) de l'élément accumulateur d'énergie (60) soit situé, en particulier avec un élément d'écartement (75) dans la zone d'un évidement (36) de la zone de montage (30) de l'habillage (10) du seuil externe (50).

2. Véhicule (1) conforme à la revendication 1,
dans lequel, dans l'habillage (10) les évidements (36) du bord latéral (35) sont réalisés de sorte que le bord latéral (35) de la zone de montage (30) s'étende en étant par segments en retrait à l'arrière des éléments de montage (33) dans la première direction d'extension transversale (Y).

3. Véhicule (1) conforme à l'une des revendications précédentes,
dans lequel, dans l'habillage (10), le bord latéral (35) de la zone de montage (30) comporte un évidement (36) entre deux éléments de montage (33) successifs voisins respectifs.

4. Véhicule (1) conforme à l'une des revendications précédentes,
dans lequel, dans l'habillage (10) la zone d'habillage (20) s'étend dans une seconde direction d'extension transversale (Z) perpendiculaire à la direction d'extension longitudinale (X) pour permettre de recouvrir à l'état monté la face externe (51) du seuil externe (50) le long de la direction d'extension longitudinale (X) et de la seconde direction d'extension transversale (Z) extérieurement et latéralement sur le véhicule (1).

5. Véhicule (1) conforme à l'une des revendications précédentes,
dans lequel, dans l'habillage (10) la zone d'habillage (20) et la zone de montage (30) sont reliées l'une à l'autre dans direction d'extension longitudinale (X) en particulier en une seule pièce ou en plusieurs pièces de matériau.

6. Véhicule (1) conforme à l'une des revendications précédentes,
dans lequel, dans l'habillage (10) un élément de montage (33) respectif est un perçage de montage (34-1) qui est réalisé pour recevoir un moyen de montage (34-2).

7. Véhicule (1) conforme à l'une des revendications précédentes,
dans lequel, l'élément accumulateur d'énergie comporte la zone de boîtier (70) et un moyen accumulateur d'énergie (80) qui est formé à la partie interne de la zone de boîtier (70), la zone de boîtier (70) s'étendant le long de la direction d'extension longitudinale (X), et comprenant l'élément de fixation (73) pour permettre sa fixation à l'état monté, avec la face de montage (79) de la zone de boîtier (70) en étant tournée vers la face inférieure du véhicule (1) et en particulier la face inférieure (54) du seuil externe (50) du véhicule (1).

8. Véhicule (1) conforme à la revendication 7,
dans lequel, dans l'élément accumulateur d'énergie, l'élément de fixation (73) est réalisé sous la forme d'un perçage de fixation (74-1) dans ou au travers de la zone de boîtier (70) qui s'étend dans la direction d'extension transversale (Z) perpendiculaire à la direction d'extension longitudinale (X) et qui est réalisé pour recevoir un moyen de fixation (74-2).

9. Véhicule conforme à l'une des revendications 7 et 8,
dans lequel, dans l'élément accumulateur d'énergie, sur la face de montage (79) de la zone de boîtier (70), dans la zone de l'élément de fixation (73) est formé au moins un élément d'écartement (75) qui s'étend dans la direction d'extension transversale (Z), et crée, à l'état monté une distance spatiale entre la face de montage (79) de la zone de boîtier (70) et la face inférieure du véhicule (1).

10. Véhicule (1) conforme à l'une des revendications 7 à 9,
dans lequel, l'élément accumulateur d'énergie est réalisé sous la forme d'un élément accumulateur haute tension.
